# EUROPEAN PATENT SPECIFICATION

(11) **EP 3 937 142 B1**
(45) Date of publication and mention of the grant of the patent: **30.08.2023**
(21) Application number: 21184901.3
(22) Date of filing: 09.07.2021
(51) Int. Cl.: G07F 13/10, B65G 59/10

(54) **CUP DISPENSER FOR A BEVERAGE VENDING MACHINE**
BECHERSPENDER FÜR EINEN GETRÄNKEAUTOMATEN
DISTRIBUTEUR DE GOBELETS POUR UN DISTRIBUTEUR AUTOMATIQUE DE BOISSONS

(30) Priority: 10.07.2020 IT 202000016861
(43) Date of publication of application: 12.01.2022
(73) Proprietor: EVOCA S.p.A., 24030 Valbrembo (BG) (IT)
(72) Inventor: DITRANI, Marco, 20121 MILANO (IT)
(74) Representative: Giannini, Manuela

(56) References cited:
- EP-A1- 1 575 006
- EP-A1- 3 576 056
- US-A- 3 057 515
- US-A- 5 518 149

## Description

### Cross-Reference to Related Applications

This patent application claims priority to Italian patent application no. 102020000016861 filed on 10.07.2020.

### Technical Field of the Invention

The present invention relates to a cup dispenser for a beverage vending machine, for example a vending machine operable to dispense beverages prepared from an anhydrous material such as coffee, tea, chocolate, or the like.

### Background of the Invention

Cup dispensers for beverage vending machines are known comprising a cup storage in the form of a turret and comprising a plurality of hollow columns housing a respective plurality of stacks of cups. In particular, each column houses a respective stack of cups.

Typically, the cup storage is rotatably mounted to rotate about a central axis to carry the columns along a circular path and bring one column at a time to a cup release station, where a cup is singled out from the bottom of the relative stack of cups and made available for the following step of filling with the beverage.

As is known, there are different types of cup dispensers on the market, which can be conceptually grouped into two main categories.

A first category comprises cup dispensers in which the columns merely have the function of containing a respective stacks of cups and are configured to engage, when brought individually to the cup release station, a common cup release device adapted to single out one cup at a time from the relative stack of cups.

These cup dispensers generally have a relative structural simplicity, but suffer from the limitation of not being usable for dispensing differently sized cups. In fact, every time a column is brought to the cup release station, the stack of cups non-reversibly engages the cup release device and, hence, the changing of the columns in the cup release station is possible only after the stack of cups that previously engaged the release device has run out.

A second category comprises cup dispensers in which the columns, in addition to containing the stacks of cups, are equipped with respective cup release devices selectively operable by a common actuator arranged at the cup release station. The fact that each column is equipped with a respective cup release device allows each column to contain a stack of cups with a size that may be from those of the stacks of cups contained in other columns and the columns to be selectively brought to the cup release station depending on the cup to be filled with the user-selected beverage.

Although the above-described cup dispensers represent an efficient solution to selectively dispense cups in a beverage vending machine, the Applicant noted that they are susceptible to further improvement.

In particular, in the field the need is felt to adapt individual columns to different types of cups, in order to increase the operative flexibility of the cup dispensers.

EP 1 575 006 A1 discloses a cup feeder comprising a supporting element for a plurality of substantially cylindrical cam elements that are arranged, during use, below a column of cups stacked along a stacking axis. The cam elements are rotatable on command about their own generating axis, which is substantially parallel to the stacking axis, and have a helical lateral profile for engaging the upper rim of the cup arranged at the bottom of the column of stacked cups. The cup feeder is provided with actuation means for the simultaneous rotation of the cam elements about their respective generating axis and with means for the simultaneous approach/spacing of the cam elements with respect to the stacking axis. The spacing/approach means comprise a rotating supporting pivot for each one of the cam elements that can be moved angularly on command about an angular displacement axis in order to move closer/away a respective cam element with respect to the stacking axis. The actuation means for simultaneous rotation comprises motor means adapted to turn simultaneously first driving wheels about each angular displacement axis and means for kinematic connection between the first driving wheels and the respective cam element.

EP 3 576 056 A1 discloses a cup dispensing device for dispensing cups and the like, and comprises a release device which is provided with a dispensing outlet, inside which a plurality of release elements are arranged which between them define a passage opening which has a diameter that is dimensioned as a function of the cups to be dispensed. The release elements are configured to cause the fall of a cup through the passage opening following a release movement thereof. The cup dispensing device further comprises an actuator (40) which is functionally connected to the release elements (30) by way of kinematic transmission means (51, 52, 53, 54) in order to actuate the release movement thereof. An adjustment element is functionally connected to the release elements in order to modify their position so as to adjust the diameter of the passage opening.

US 5 518 149 A discloses an apparatus for dispensing a lowermost cup from a stack of nested cups. The cups are disposed within an opening formed through an annular housing, and a group of cam assemblies project inward from the housing to support and selectively dispense the cups. Alignment holes are formed through the housing and the cam assemblies to facilitate proper alignment of the cam assemblies relative to one another during assembly of the dispenser. The cam assemblies move inward and outward relative to the opening to accommodate cups of different under-rim diameters within a given range. In particular, the cam assemblies move in an arc and pivot relative to the housing and thereby remain satisfactorily aligned relative to the centre of the opening over a wider range of under-rim cup diameters.

US 3 057 515 A discloses a cup feeding device with an escapement mechanism comprising a pair of feeding heads adapted to be located on diametrically opposite sides of a stack of cups, each head including, a pair of vertically spaced apart cup retainers slidably mounted for movement between cup-retaining and cup-releasing positions, means for resiliently biasing said retainers toward the cup-retaining position, a lever having a lost motion connection with each retainer, and means for reciprocating a portion of the lever in a straight line whereby said lost motion connections cause the retainers to alternately slide into and out of cup-retaining position and dwell briefly when both are in the cup-retaining position.

### Object and Summary of the Invention

The aim of the present invention is to provide an improved cup dispenser which is highly reliable and cost-effective, and which allows to fulfil the above-indicated need related to cup dispensers of the known type.

According to the invention, a cup dispenser for a beverage vending machine is provided, as claimed in the appended claims.

### Brief Description of the Drawings

Figure 1 is a perspective view, with parts removed for clarity, of a preferred embodiment of a cup dispenser according to the present invention.
Figures 2 and 3 is a perspective view, in enlarged scale and with parts removed for clarity, of a column of the cup dispenser of Figure 1 in different operating conditions.
Figure 4 is a perspective view, on an enlarged scale and with parts in transparency and parts removed for clarity, of a detail of the column of Figure 2.
Figure 5 is a perspective, on an enlarged scale and with parts in transparency and parts removed for clarity of a further detail of the column of Figure 2.
Figures 6 and 7 is cross-section, with parts removed for clarity, of the column of Figure 2 in different operating conditions.
Figures 8 and 9 are further cross-sections, with parts removed for clarity, of the column of Figure 2 is the operating conditions shown in Figures 6 and 7, respectively.

### Detailed Description of Preferred Embodiments of the Invention

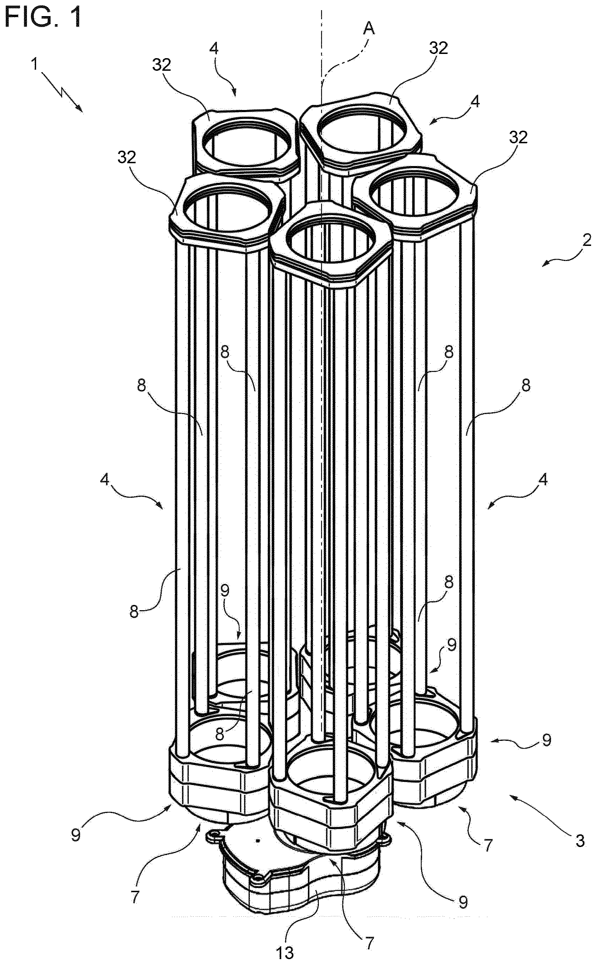

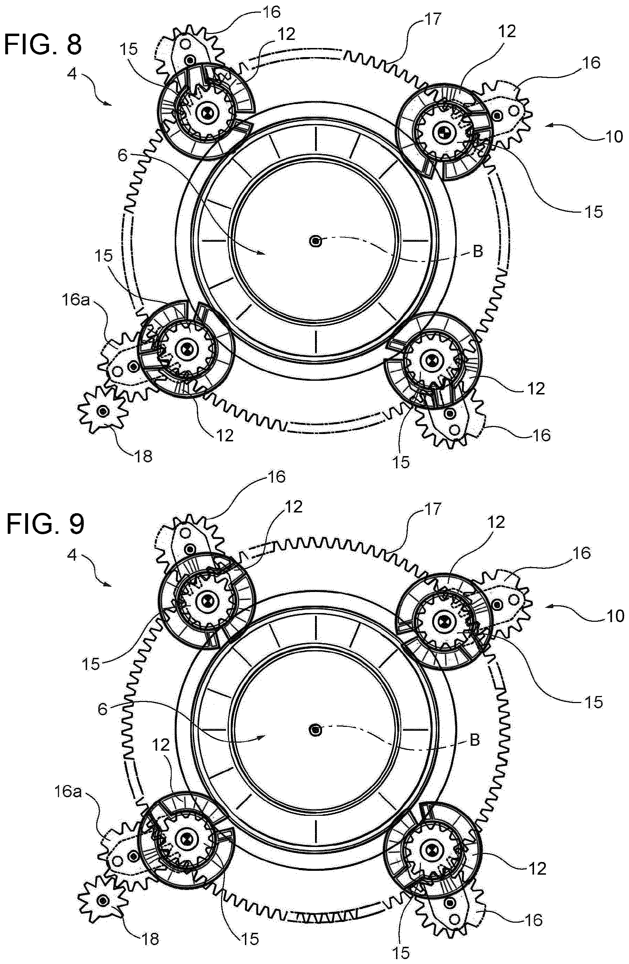

With reference to Figure 1, reference numeral 1 globally denotes a cup dispenser (cups are visible in Figures 8 and 9), which is part of a beverage vending machine (known and not shown), for example a vending machine operable to dispense hot beverages prepared from an anhydrous material, such as tea, coffee, chocolate or the like

In the beverage vending machines, the cup dispenser 1 is operated at the beginning of a beverage preparation cycle to supply an empty cup to a cup filling station (not shown), in which the cup is filled with ingredients of a beverage recipe or with the beverage.

The cup dispenser 1 comprises a cup storage 2, in particular in the form of a turret, rotatably mounted within the beverage dispenser (in a known way and not described in detail) to rotate about a rotation axis A and comprising a support basket 3 (partially visible in Figure 1) and a plurality of cup containment and release members mounted on the basket 3 around the axis A.

In particular, the cup containment and release members are defined by a plurality of columns 4, which are releasably coupled to the basket 3, and are each adapted to house a respective stack of cups, of the same size as or different from the cups housed in the other columns 4, and, during operation, are rotated by the basket 3 about the axis A so as to selectively reach a stationary cup release station, which may correspond to the aforementioned cup filling station or be connected to the latter by means of a stationary chute adapted to rapidly convey to the cup filling station an empty cup released in the cup release station.

Since the columns 4 are all structurally and functionally similar to each other, for brevity and ease of description, reference will be made hereinafter to a single column 4.

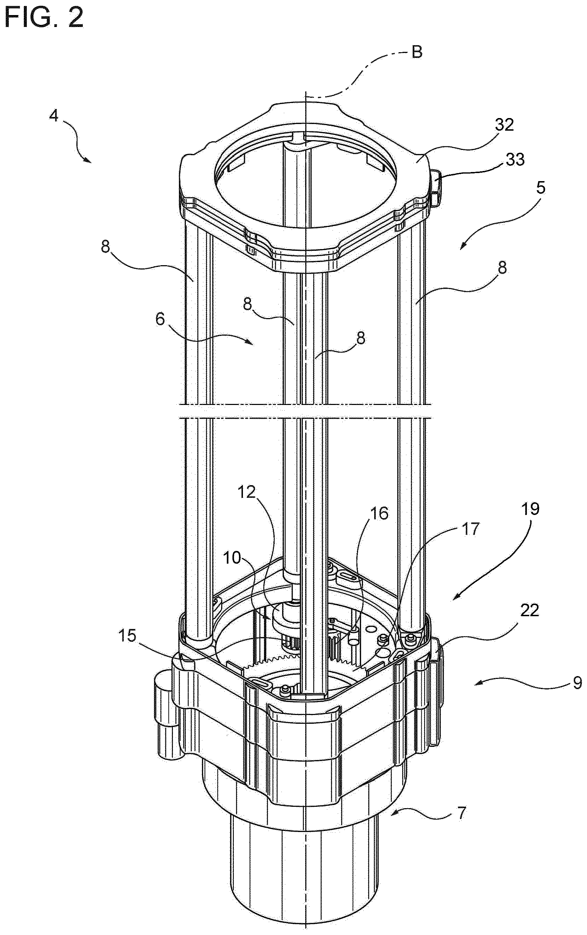

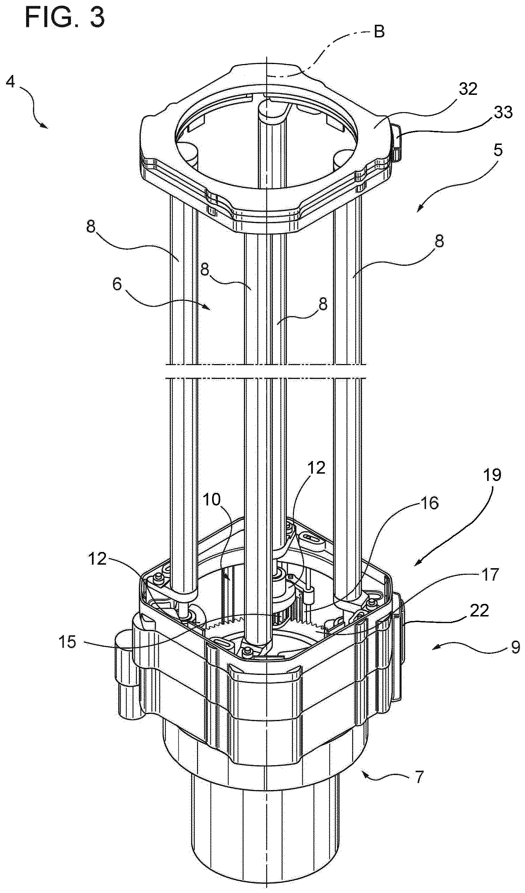

In detail, as shown in Figures 2 and 3, each column 4 has a longitudinal axis B parallel to the axis A, in assembling conditions, and includes:
- a containment portion 5, which defines an upper portion of the column 4 and comprises a given number of containment members arranged around the axis B in such a way as to define therebetween a guide channel 6 adapted to laterally contain, preferably with a certain radial clearance, a respective stack of cups, and to axially guide the stack of cups as the cups are axially singled out from the bottom of the stack of cups;
- an outlet or dispensing portion 7, which defines a lower end portion of column 4 and preferably comprises a tubular chute along which individual cups, after being singled out from the respective stack of cups, fall downwards to reach a support device (not shown) defining the aforementioned cup filling station; and
- an intermediate or release portion 9, which is arranged between the containment portion 5 and the outlet portion 7 and comprises a cup release device 10 adapted to support the stack of cups contained in the column 4 and, when operated, single out individual cups from the bottom of the stack of cups.

In the embodiment described herein, the aforementioned containment members that delimit the guide channel 6 of the containment portion 5 are defined by a plurality of rods 8 uniformly distributed around, and parallel to, the respective axis B.

In a variant not shown, the containment members may have the form of blades or other elongated members, more or less wide, and suitable to define the guide channel 6.

In the example shown, thee rods 8 are in the number of four but may be in any number, from a minimum of three.

The rods 8 are coupled to the intermediate portion 9 at lower axial ends thereof and are mutually connected at their upper free axial ends by an annular joining members, which will be described hereinafter.

Preferably, each column 4 further has a tubular casing (not shown), which surrounds the respective rods 8 so as to externally close the guide channel 6 and protect the stack of cups from exposure to external agents such as dust or moisture.

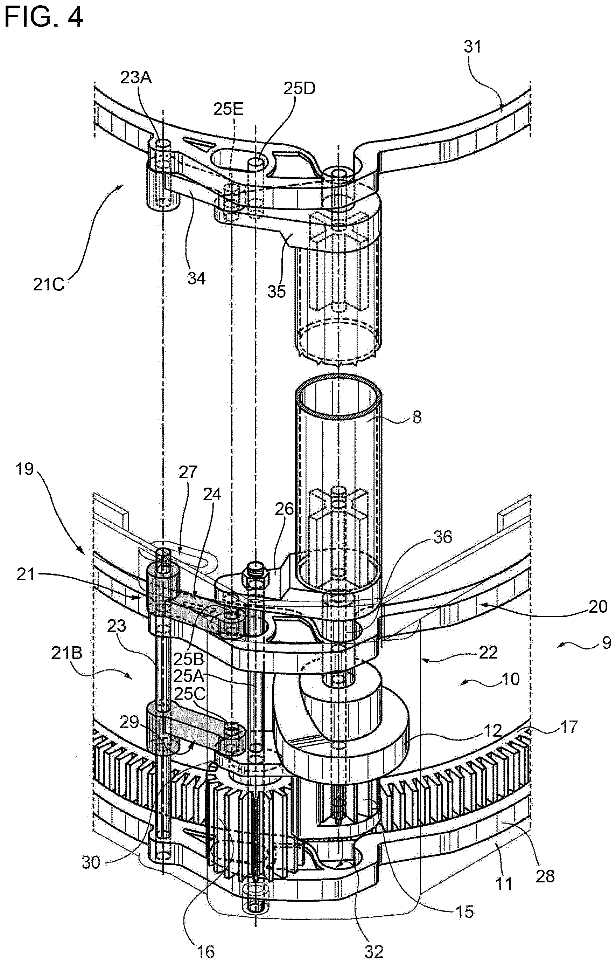

Conveniently, as shown in Figures 2, 3 and 4, the cup release device 10 is of a cam type and comprises a stationary annular body 11 (Figures 4, 6 and 7) coaxial to the axis B and a plurality of cam members 12, four in the example shown, mounted inside the annular body 11 to rotate about respective axes parallel to the axis B and evenly distributed about the axis B so as to define therebetween a cup downfall channel.

In detail, the cam members 12 have a winding profile (of a known type) shaped to define, when the cam members 12 are at rest, a flat support for an edge of the last cup in the stack of cups so as to support the entire stack of cups. By contrast, when the cam members 12 are simultaneously rotated about their respective axes, the winding profiles insert between edges of the last and penultimate cups in the stack of cups so as to single out, and, hence, cause it to fall, the last cup in the stack of cups and, at the same time, support the remaining cups in the stack of cups.

In order to operate the cam members 12, the cup release device 10 has a transmission, preferably a gear transmission, adapted to be operated by an actuator assembly 13 (Figure 1) common to all the cup release devices 10 and arranged below the cup storage 2.

Conveniently, in the preferred embodiment shown in the appended Figures, the actuator assembly 13 is configured to operate the cup release devices 10 when they reach the cup release station, and to rotate the cup storage 2 about the axis A in order to selectively bring the columns 4 to the cup release station. This type of actuator is described in detail in WO 2017/158555.

In particular, as shown in Figure 4, each cam member 12 comprises a cylindrical toothed portion 15 meshing with a respective gear 16 mounted on the annular body 11 to rotate about a respective fixed axis parallel to axis B. All gears 16 of the cam members 12 further mesh with a ring gear 17 rotatably mounted about the axis B within the annular body 11.

One of the gears 16, hereinafter referred to as 16a for clarity (Figures 8 and 9), also meshes with a power input gear 18 kinematically connected to the actuator assembly 13 to receive therefrom the power to be transmitted to the cup release device 10 to move it.

During operation, a rotation of the power input gear 18 is transmitted from the gear 16a to the ring gear 17, which, via the other gears 16, causes the cam members 12 to rotate simultaneously (Figures 8 and 9).

In the embodiment shown in the appended figures, the cup release device 10 is of a radially adjustable type, i.e., the position of the cam members 12 of the cup release device 10 may be radially adjusted so as to increase or decrease the width of the cross-section of the cup downfall channel defined by the cam members 12.

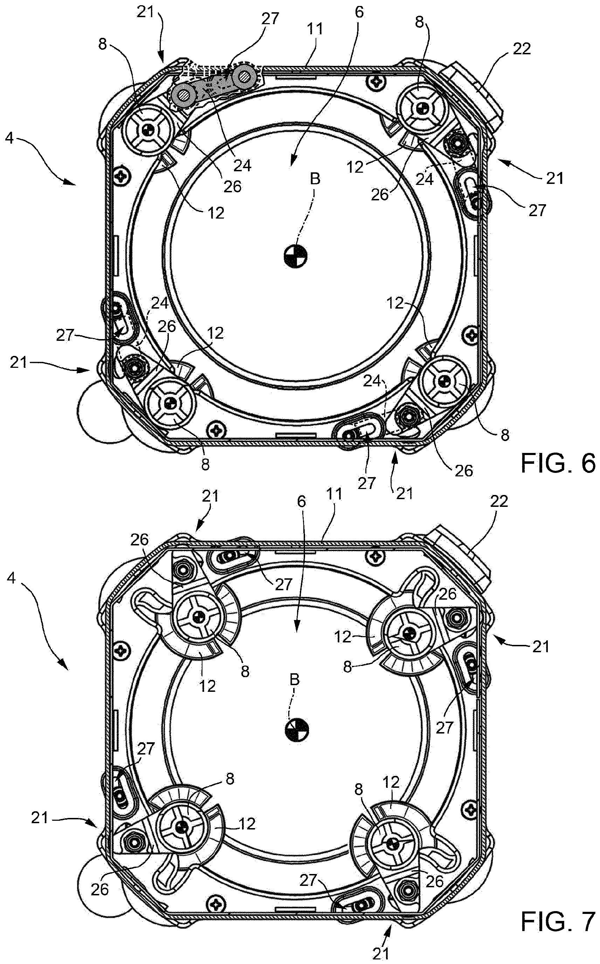

In particular, the cam members 12 are radially movable from and to the axis B to assume:
- a retracted position, in which the cup downfall channel defined by the cam members 12 has an enlarged cross-section and in which the cam members 12 are configured to support a first type of cups, in particular cups of relatively large size (diameter) (Figures 2 and 6); and
- an extracted position, in which the cam members 12 are closer to axis B than in the retracted position, so as to define a cup downfall channel with a restricted cross-section and to support a second type of cups, in particular cups of a smaller size (diameter) than in the previous case (Figures 3 and 7).

In a preferred embodiment, the cam members 12 are movable in a plurality of stable intermediate positions, radially between the retracted and extracted positions.

In the present invention, the containment members, in this case the rods 8, are radially movable from and to the axis B.

In other words, the rods 8 are adjustable in a radial direction so as to narrow or widen the cross-section of the guide channel 6 and cause it to have a cross-section equal to, or at least comparable to, the section of the cup downfall channel defined by the cam members 12 and proportionate to the diameter of the cups in the stack of cups it houses, so as to perform an effective lateral containment and axial guidance of the stack of cups.

In particular, the rods 8 are radially movable at least between:
- a maximum opening position, in which the guide channel 6 has an enlarged cross-section (Figures 2 and 6) to house a first type of cups, in particular cups of relatively large size (diameter); and
- a minimum opening position, in which the guide channel 6 has a smaller cross-section than in the previous case, to house a second type of cups, in particular cups of a smaller size (diameter) than in the previous case (Figures 3 and 7).

Each column 4 is thereby reconfigurable in size to accommodate different types of cups, particularly cups of different sizes.

In a preferred embodiment, the rods 8 are movable in a plurality of stable intermediate positions, radially comprised between the minimum and maximum opening positions.

The column 4 comprises an adjustment device 19 configured to adjust, i.e., to move, the rods 8 between the minimum and maximum opening positions and, preferably, to arrange the rods 8 in the above-mentioned radially intermediate positions.

In detail, the adjustment device 19 comprises (Figure 4):
- an adjustment ring 20 rotatably mounted on the annular body 11 and coaxial to the axis B;
- one or more lever mechanisms 21, four in this case, i.e., one for each rod 8, each of which is operatively coupled both to the adjustment ring 20 and to the respective rod 8, is arranged at the intermediate portion 9, and is operable to control the movement of the respective rod 8 between the minimum and maximum opening positions, or to one of the aforesaid stable intermediate positions; and
- an adjustment lever 22 angularly coupled to the adjustment ring 20 to operate, by means of the latter, the lever mechanisms 21 and cause the movement of the rods 8.

In the example shown, the adjustment lever 22 is defined by a switch mounted outside the annular body 11 and manually operable; in an alternative embodiment not shown, the adjustment lever 22 is replaced by a suitable powered control member, which is automatically operable based on the size of the cups in column 4.

In greater detail, each lever mechanism 21 comprises (Figure 4):
- a pin 23 parallel to the axis B and integral with the adjustment ring 20 in a position angularly spaced from the corresponding rod 8;
- a connecting rod 24 hinged, at one first end, to the pin 23; and
- a rocker arm 26 hinged to a pin 25A fixed on the annular body 11 and parallel to the axis B. The rocker arm 26 has two opposite arms, a first arm of which is hinged to a second end of the above-mentioned connecting rod 24 by means of a pin 25B (Figure 4) parallel to the pin 25A, and a second arm of which is integral with the respective rod 8, at a lower end thereof.

During operation, the operation (displacement) of the adjustment lever 22 causes an angular movement of the adjustment ring 20 about the axis B. This results in a corresponding rotation, about the axis B, of the pin 23 and of the connecting rod 24 which, pushed by the pin 23, rotates around the axis B and, at the same time, translates towards the respective rod 8. The pin 25B, which rotatably connects the connecting rod 24 to the first arm of the rocker arm 26, is arranged with respect to the fulcrum pin 25A of the rocker arm 26 in such a position that the thrust given to the first arm by the connecting rod 24 causes the rocker arm 26 to rotate about the fulcrum pin 25A in one direction or the other, depending on the direction of displacement of the connecting rod 24, which in turn depends on the direction of rotation of the adjustment ring 20.

Depending on the direction of rotation of the rocker arm 26, the second arm of the rocker arm 26 is moved closer to or further away from the axis B and, as a result, the relative rod 8 is moved between the minimum and maximum opening positions (Figures 6 and 7). This applies to each lever mechanism 21 and to each rod 8, since the movement of the adjustment ring 20 operates all the lever mechanisms 21 simultaneously.

In order to delimit the angular displacement of each pin 23, the column 4 comprises, for each pin 23, a respective mechanical block.

In particular, each mechanical block is defined by a slot 27 which is formed on the annular body 11, is in the form of an arc of a circle coaxial to the axis B, and is crosswise engaged by the corresponding pin 23. When pins 23 are moved along their respective slots as a result of a rotation of the adjustment ring 20, the closed ends of the slots constitute respective end stops for the pins 23, thus defining the minimum and maximum opening positions of the rods 8 kinematically connected to the pins 23 by the respective connecting rods 24 and rocker arms 26.

The above-described adjustment device 19 may be used to adjust only the radial position of the rods 8 or, in the preferred and non-limiting embodiment shown in the appended figures, the aforementioned adjustment device 19 is also configured to adjust the angular position of the cam members 12 between the above-mentioned retracted and extracted positions.

To this end, the adjustment device 19 comprises:
- a further adjustment ring 28, which substantially corresponds to the adjustment ring 20, is rotatably mounted on the annular body 11 below, and at a certain distance from, the adjustment ring 20, and is operatively coupled to the adjustment lever 22; and
- one or more further lever mechanisms 21B, four in this case, i.e., one for each cam member12, functionally similar to the lever mechanisms 21, and configured to operatively couple the adjustment ring 28 to the cam members 12 so as to simultaneously move the latter between the respective retracted positions, extracted positions and intermediate stable positions in response to a rotation of the adjustment ring 28.

In particular, each lever mechanism 21B comprises:
- a connecting rod 29, which is functionally similar to the connecting rod 24 and, like the latter, is hinged at a first end thereof, on the pin 23, which extends between, and mutually connects, the adjustment ring 20 and the adjustment ring 28;
- a rocker arm 30, which is functionally similar to the rocker arm 26 and, like the latter, is hinged to the pin 25A, the axis of which matches with the axis of rotation of a corresponding gear 16.

Furthermore, similarly to the rocker arm 26, the rocker arm 30 also comprises two opposite arms, a first arm of which is hinged to a second end of the connecting rod 29 by means of a pin 25C (Figure 4) coaxial to the pin 25A, and a second arm rotatably supports the cam members 12 whose toothed portion 15 meshes with the gear 16.

In particular, as shown in Figure 4, the axis of rotation of the cam member 12 carried by a rocker arm 30 and the axis of the rod 8 carried by the rocker arm 26 hinged to the same pin 25A of the rocker arm 30 are coincident and, preferably, the cam member 12 and the corresponding rod 8 are mutually coupled via a connecting pin 36.

During operation, the operation (displacement) of the adjustment lever 22 also causes, in addition to the rotation of the adjustment ring 20, an identical rotation of the adjustment ring 28 about the axis B. Similarly to what described above with reference to the connecting rod 24 and the rocker arm 26, the angular displacement of the adjustment ring 28 results in a rotation about the pin 25A of the rocker arm 30 and, therefore, of the corresponding cam member 12.

Depending on the direction of rotation of rocker arm 30, rotation of the latter results in the second arm of the rocker arm 30 being moved closer to or away from the axis B and, consequently, in the cam member 12 being moved between the retracted and extracted positions (Figures 6 and 7).

This applies simultaneously to each lever mechanism 21B and each cam member 12, since the adjustment ring 28 operates all the lever mechanisms 21B simultaneously.

The fact that the adjustment rings 20 and 28 are mutually connected by pins 23 and the cam members 12 are integrally connected to the corresponding rods 8 by the corresponding pins 36 results in a synchronised adjustment of the rods 8 and of cam members 12.

A radial movement of the cam member 12 thereby corresponds to a radial movement of the corresponding rod 8, resulting in a synchronous adjustment of the guide channel 6 and the cup downfall channel.

In view of the above, the adjustment lever 22 can be moved between:
- a first position, in which the rods 8 are in their maximum opening positions and the cam members 12 are in their retracted positions (Figures 2 and 6); and
- a second position, in which the rods 8 are in their minimum opening positions and the cam members 12 are in their extracted positions (Figures 3 and 7).

In an alternative example not encompassed by the claims and not shown, the above-described adjustment device 19 is, relative to the rods 8, operatively independent from the cam members 12 in the sense that the radial adjustment of the latter is carried out independently of the adjustment of the rods 8 by means of a further adjustment device of the same type as or different from that which adjusts the rods 8.

In the preferred embodiment shown in the accompanying figures, to further improve the control and precision of radial adjustment of the rods 8, the adjustment device 19 is further configured to provide the same radial displacement to the upper ends of the rods 8 as the adjustment ring 20 provides to the lower ends of the rods 8.

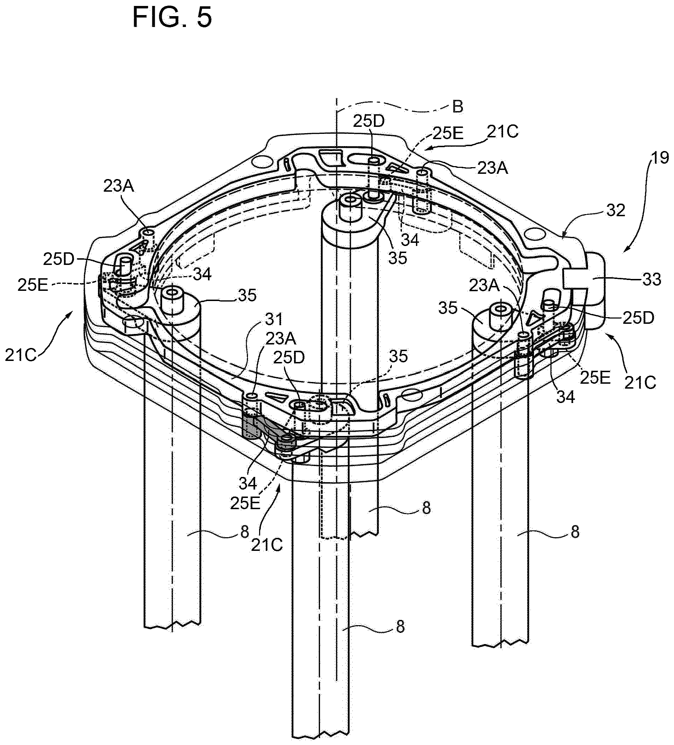

To this end, the adjustment device 19 comprises (Figures 4 and 5):
- a further adjustment ring 31, which is part of the above-mentioned annular joint mutually connecting the upper free ends of the rods 8, is rotatably mounted about the axis B on a stationary upper annular body 32 of the column 4 (Figures 1, 2, 3 and 5), and substantially corresponds to, and is aligned with, the adjustment rings 20 and 28;
- one or more further lever mechanisms 21C, four in this case, i.e., one for each rod 8, functionally similar to the lever mechanisms 21 and 21B and configured to operatively couple the adjustment ring 31 to the rods 8 so as to simultaneously move the upper ends of the latter between their respective minimum and maximum opening positions in response to a rotation of the adjustment ring 31; and
- an adjustment lever 33 integral with the adjustment ring 31 and movable to operate, via the adjustment ring 31, the lever mechanisms 21C and cause the rods 8 to move.

In the example shown, the adjustment lever 33 is defined by a manually operable switch which is functionally similar to the switch defined by the adjustment lever 22; in an alternative embodiment not shown, the adjustment lever 33 may be replaced by a suitable powered control member, which may be operated automatically depending on the size of the cups in column 4.

In particular, each lever mechanism 21C comprises:
- a connecting rod 34, which is functionally similar to the connecting rods 24 and 29 and is hinged, at one first end thereof, on a pin 23A integrally fixed to the adjustment ring 31 and coaxial to the pin 23; and
- a rocker arm 35, which is functionally similar to the rocker arms 26 and 30 and is hinged to a pin 25D aligned with the pin 25A.

Similarly to the rocker arms 26 and 30, the rocker arm 35 also comprises two opposite arms, a first arm of which is hinged to a second end of the connecting rod 34 by means of a pin 25E (Figure 4) parallel to the pin 25A and aligned with the pins 25B and 25C, and a second arm is integrally connected to the upper end of the relative rod 8.

Operation of the adjustment ring 31 and associated lever mechanisms 21C is substantially identical to that of the adjustment ring 20 and respective lever mechanisms 21 and to that of the adjustment ring 28 and respective lever mechanisms 21B and will not be further detailed herein.

It should only be noted that, in order to achieve an even radial adjustment of the guide channel 6, it is important that the adjustment rings 20 and 28 and the adjustment ring 31 are provided with the same angular displacement by means of the adjustment lever 22 and adjustment lever 33 respectively. In order to ensure that this movement is identical, it is possible to make the adjustment lever 22 and the adjustment lever 33 as a single adjustment lever adapted to simultaneously control the adjustment rings 20, 28 and 31.

Review of the features of the cup dispenser 1 of the present invention allow the advantages that it allows to obtain to be appreciated.

In particular, the provision of radially adjustable rods 8 allows to use guide channels 6 whose size - diameter - can be varied depending on manufacturing requirements.

In practice, each column 4 made according to the invention can be adjusted to accommodate different types of cups.

The operative flexibility of the cup dispenser 1 is therefore improved if compared to the case where the columns do not have an adjustable guide channel.

## Claims

1. A cup dispenser (1) for a beverage vending machine; the cup dispenser (1) comprises at least a cup containment and release assembly (4) with a longitudinal axis (B) and comprising a containment portion (5), which defines a guide channel (6) coaxial with the longitudinal axis (B) and adapted to contain a stack of cups; and a release portion (9), which is arranged below the containment portion (5) and is configured to support the stack of cups and single out individual cups from the bottom of the stack of cups;
the containment portion (5) comprises a number of containment members (8) laterally delimiting the guide channel (6);
the containment members (8) are mounted to be radially movable to modify a cross section of the guide channel (6);
the containment members (8) are radially moveable between a maximum opening position, in which the guide channel (6) is so sized as to contain larger cups, and a minimum opening position, in which the guide channel (6) is so sized as to contain smaller cups;
the cup containment and release assembly (4) comprises an adjustment device (19) configured to simultaneously move all the containment members (8) between the maximum and minimum opening positions;
the adjustment device (19) comprises a first adjustment ring (20) mounted to rotate about the longitudinal axis (B), and a number of first lever mechanisms (21), each of which kinematically connects the first adjustment ring (20) and a corresponding containment member (8) to move the containment member (8) between the maximum and minimum opening positions in response to a rotation of the first adjustment ring (20) about the longitudinal axis (B);
the release portion (9) comprises a release device (10) with a number of release members (12);
in order to radially adjust the position of the release members (12), the adjustment device (19) comprises a second adjustment ring (28) and a number of second lever mechanisms (21B), which are functionally equivalent to the first adjustment ring (20) and, respectively, to the first lever mechanisms (21) and are arranged at the release members (12);
the first adjustment ring (20) and the second adjustment ring (28) are mutually angularly coupled so that a radial movement of the containment members (8) corresponds to the same radial movement of the release members (12).

2. The cup dispenser (1) of claim **1,** wherein each first lever mechanism (21) comprises:
- a movable pin (23) fixed to the first adjustment ring (20) to rotate therewith about the longitudinal axis (B);
- a connecting rod (24) with a first end hinged to the movable pin (23); and
- a rocker arm (26) hinged to a fixed fulcrum pin (25A) and comprising a first arm hinged to a second end of the connecting rod (24), and a second arm rigidly connected to the corresponding containment member (8) to cause a rotation of the rocker arm (26) about the fulcrum pin (25A) to result in a radial movement of the containment member (8) from or towards the maximum opening position or the minimum opening position.

3. The cup dispenser (1) of claim **1** or **2,** wherein the first adjustment ring (20) and the first lever mechanisms (21) are arranged at a lower axial end of the containment members (8).

4. The cup dispenser (1) of claim **3,** wherein the adjustment device (19) further comprises a third adjustment ring (31) and a number of third lever mechanisms (21C), which are functionally equivalent to the first adjustment ring (20) and, respectively, to the first lever mechanisms (21), and are arranged at an upper axial end of the containment members (8).

5. The cup dispenser (1) of any one of the preceding claims, wherein the release members (12) define a cup downfall channel and are configured to support the stack of cups and to single out individual cups from the bottom of the stack;
the release members (12) are radially moveable between a retracted position, in which the cup downfall channel is configured to support and release larger cups, and an extracted position, in which the cup downfall channel is configured to support and release smaller cups;
the adjustment device (19) is further configured to simultaneously move all the release members (12) between the retracted and extracted positions to modify a cross section of the cup downfall channel.

6. The cup dispenser (1) of any one of the preceding claims, wherein each second lever mechanism (21B) comprises:
- a movable pin (23) fixed to the third adjustment ring (28) to rotate therewith about the longitudinal axis (B);
- a connecting rod (29) with a first end hinged to the movable pin (23); and
- a rocker arm (30) hinged to a fixed fulcrum pin (25A) and comprising a first arm hinged to a second end of the connecting rod (29), and a second arm rigidly connected to a corresponding release member (12) to cause a rotation of the rocker arm (30) about the fulcrum pin (25A) to result in a radial movement of the release member (12) from or towards the retracted position or the extracted position.

7. The cup dispenser (1) of any one of the preceding claims, wherein the containment members (8) are in the form of rods or longitudinal blades parallel to the longitudinal axis (B) and delimiting the guide channel (6).

8. The cup dispenser (1) of any one of the preceding claims, wherein the cup dispenser (1) is of a turret type and further comprises:
- a support (3) mounted to rotate about a rotation axis (A);
- a plurality of cup containment and release members (4) mounted on the support (3) around the rotation axis (A) with respective longitudinal axes (B) parallel to the rotation axis (A); and
- an actuator (13) operable to rotate the support (3) about the rotation axis (A) and selectively move the cup containment and release members (4) to a stationary cup release station.

## Patentansprüche

1. Ein Becherspender (1) für einen Getränkeautomaten;
wobei der Becherspender (1) Folgendes aufweist:
mindestens eine Becherrückhalte- und -abgabeanordnung (4) mit einer Längsachse (B) und einen Rückhalteabschnitt (5) aufweisend, der einen zur Längsachse (B) koaxialen Führungskanal (6) definiert und zur Aufnahme eines Becherstapels geeignet ist, und einen Abgabeabschnitt (9), der unterhalb des Rückhalteabschnitts (5) angeordnet und eingerichtet ist, den Becherstapel zu stützen und einzelne Becher vom Boden des Becherstapels auszusondern;
wobei der Rückhalteabschnitt (5) eine Anzahl von Rückhalteelementen (8) aufweist, die den Führungskanal (6) seitlich begrenzen;
wobei die Rückhalteelemente (8) angebracht sind, radial bewegbar zu sein, um einen Querschnitt des Führungskanals (6) zu verändern;
wobei die Rückhalteelemente (8) radial zwischen einer Position maximaler Öffnung, in der der Führungskanal (6) so bemessen ist, dass er größere Becher aufnehmen kann, und einer Position minimaler Öffnung bewegbar sind, in der der Führungskanal (6) so bemessen ist, dass er kleinere Becher aufnehmen kann;
wobei die Becherrückhalte- und -abgabeanordnung (4) eine Einstellvorrichtung (19) aufweist, die eingerichtet ist, all die Rückhalteelemente (8) gleichzeitig zwischen der maximalen und der minimalen Öffnungsposition zu bewegen;
wobei die Einstellvorrichtung (19) einen ersten Einstellring (20) aufweist, der so angebracht ist, dass er sich um die Längsachse (B) dreht, und eine Anzahl erster Hebelmechanismen (21), von denen jeder den ersten Einstellring (20) und ein entsprechendes Rückhalteelement (8) kinematisch verbindet, um das Rückhalteelement (8) zwischen der maximalen und der minimalen Öffnungsposition zu bewegen, und zwar in Reaktion auf eine Drehung des ersten Einstellrings (20) um die Längsachse (B);
wobei der Abgabeabschnitt (9) eine Abgabevorrichtung (10) mit einer Anzahl von Abgabeelementen (12) aufweist;
wobei, um die Position der Abgabeelemente die radial einzustellen, die Einstellvorrichtung (19) einen zweiten Einstellring (28) und eine Anzahl von zweiten Hebelmechanismen (21B) aufweist, die jeweils dem ersten Einstellring (20) und den ersten Hebelmechanismen (21) funktionell gleichwertig sind und die an den Abgabeelementen (12) angeordnet sind;
wobei der erste Einstellring (20) und der zweite Einstellring (28) winklig miteinander gekoppelt sind, so dass eine radiale Bewegung der Rückhalteelemente (8) der gleichen radialen Bewegung der Abgabeelemente (12) entspricht.

2. Der Becherspender (1) nach Anspruch 1, wobei jeder erste Hebelmechanismus (21) Folgendes aufweist:
- einen bewegbaren Stift (23), der an dem ersten Einstellring (20) befestigt ist, um sich mit diesem um die Längsachse (B) zu drehen;
- eine Verbindungsstange (24), die mit einem ersten Ende an dem bewegbaren Stift (23) angelenkt ist; und
- einen Kipphebel (26), der an einem festen Drehzapfen (25A) angelenkt ist und der einen ersten Arm, der an einem zweiten Ende der Verbindungsstange (24) angelenkt ist, und einen zweiten Arm aufweist, der starr mit dem entsprechenden Rückhalteelement (8) verbunden ist, um eine Drehung des Kipphebels (26) um den Drehzapfen (25A) zu veranlassen, um zu einer radialen Bewegung des Rückhalteelements (8) aus der oder in die Richtung der maximalen Öffnungsposition oder der minimalen Öffnungsposition zu führen.

3. Der Becherspender (1) nach Anspruch 1 oder 2, wobei der erste Einstellring (20) und die ersten Hebelmechanismen (21) an einem unteren axialen Ende der Rückhalteelemente (8) angeordnet sind.

4. Der Becherspender (1) nach Anspruch 3, wobei die Einstellvorrichtung (19) ferner einen dritten Einstellring (31) und eine Anzahl dritter Hebelmechanismen (21C) aufweist, die jeweils dem ersten Einstellring (20) und den ersten Hebelmechanismen (21) funktionell gleichwertig sind und die an einem oberen axialen Ende der Rückhalteelemente (8) angeordnet sind.

5. Der Becherspender (1) nach einem der vorhergehenden Ansprüche, wobei die Abgabeelemente (12) einen Becherabwurfkanal definieren und eingerichtet sind, den Becherstapel zu stützen und einzelne Becher vom Boden des Stapels auszusondern;
wobei die Abgabeelemente (12) radial zwischen einer eingezogenen Position, in der der Becherabwurfkanal eingerichtet ist, größere Becher zu tragen und abzugeben, und einer herausgezogenen Position bewegbar sind, in der der Becherabwurfkanal eingerichtet ist, kleinere Becher zu tragen und abzugeben;
wobei die Einstellvorrichtung (19) ferner eingerichtet ist, alle Abgabeelemente (12) gleichzeitig zwischen der eingezogenen und der herausgezogenen Position zu bewegen, um einen Querschnitt des Becherabwurfkanals zu verändern.

6. Der Becherspender (1) nach einem der vorhergehenden Ansprüche, wobei jeder zweite Hebelmechanismus (21B) Folgendes aufweist:
- einen bewegbaren Stift (23), der an dem dritten Einstellring (28) befestigt ist, um sich mit diesem um die Längsachse (B) zu drehen;
- eine Verbindungsstange (29), die mit einem ersten Ende an dem bewegbaren Stift (23) angelenkt ist; und
- einen Kipphebel (30), der an einem festen Drehzapfen (25A) angelenkt ist und der einen ersten Arm, der an einem zweiten Ende der Verbindungsstange (29) angelenkt ist, und einen zweiten Arm aufweist, der starr mit einem entsprechenden Abgabeelement (12) verbunden ist, um eine Drehung des Kipphebels (30) um den Drehzapfen (25A) zu veranlassen, um zu einer radialen Bewegung des Abgabeelements (12) aus der oder in die Richtung der eingezogenen Position oder der herausgezogenen Position zu führen.

7. Der Becherspender (1) nach einem der vorhergehenden Ansprüche, wobei die Rückhalteelemente (8) die Form von Stangen oder Längslamellen haben, die parallel zur Längsachse (B) verlaufen und den Führungskanal (6) begrenzen.

8. Der Becherspender (1) nach einem der vorhergehenden Ansprüche, wobei der Becherspender (1) vom Revolvertyp ist und ferner Folgendes aufweist:
- einen Träger (3), der um eine Drehachse (A) drehbar angebracht ist;
- eine Vielzahl von Becherrückhalte- und -abgabeelementen (4), die auf dem Träger (3) um die Drehachse (A) mit jeweiligen Längsachsen (B) parallel zur Drehachse (A) angebracht sind; und
- einen Aktor (13), der betreibbar ist, den Träger (3) um die Drehachse (A) zu drehen und die Becherrückhalte- und -abgabeelemente (4) selektiv zu einer stationären Becherabgabestation zu bewegen.

## Revendications

1. Distributeur de gobelets (1) pour un distributeur automatique de boissons ; le distributeur de gobelets (1) comprend au moins un ensemble de contenance et de libération de gobelets (4) avec un axe longitudinal (B) et comprenant une partie de contenance (5), qui définit un canal de guidage (6) coaxial avec l'axe longitudinal (B) et apte à contenir une pile de gobelets ; et une partie de libération (9), qui est agencée au-dessous de la partie de contenance (5) et est configurée pour supporter la pile de gobelets et faire sortir des gobelets individuels par le bas de la pile de gobelets ;
la partie de contenance (5) comprend un nombre d'éléments de contenance (8) délimitant latéralement le canal de guidage (6) ;
les éléments de contenance (8) sont montés pour être mobiles radialement pour modifier une coupe transversale du canal de guidage (6) ;
les éléments de contenance (8) sont mobiles radialement entre une position d'ouverture maximale, à laquelle le canal de guidage (6) est dimensionné pour contenir des gobelets plus grands, et une position d'ouverture minimale, à laquelle le canal de guidage (6) est dimensionné pour contenir des gobelets plus petits ;
l'ensemble de contenance et de libération de gobelets (4) comprend un dispositif d'ajustement (19) configuré pour déplacer simultanément tous les éléments de contenance (8) entre les positions d'ouverture maximale et minimale ;
le dispositif d'ajustement (19) comprend un premier anneau d'ajustement (20) monté pour tourner autour de l'axe longitudinal (B), et un nombre de premiers mécanismes de levier (21), chacun d'eux reliant cinématiquement le premier anneau d'ajustement (20) et un élément de contenance (8) correspondant pour déplacer l'élément de contenance (8) entre les positions d'ouverture maximale et minimale en réponse à une rotation du premier anneau d'ajustement (20) autour de l'axe longitudinal (B) ;
la partie de libération (9) comprend un dispositif de libération (10) avec un nombre d'éléments de libération (12) ;
afin d'ajuster radialement la position des éléments de libération (12), le dispositif d'ajustement (19) comprend un deuxième anneau d'ajustement (28) et un nombre de deuxièmes mécanismes de levier (21B), qui sont fonctionnellement équivalents au premier anneau d'ajustement (20) et, respectivement, aux premiers mécanismes de levier (21) et sont agencés au niveau des éléments de libération (12) ;
le premier anneau d'ajustement (20) et le deuxième anneau d'ajustement (28) sont mutuellement couplés angulairement de sorte qu'un déplacement radial des éléments de contenance (8) corresponde au même déplacement radial des éléments de libération (12).

2. Distributeur de gobelets (1) selon la revendication 1, dans lequel chaque premier mécanisme de levier (21) comprend :
- une broche mobile (23) fixée au premier anneau d'ajustement (20) pour tourner avec celui-ci autour de l'axe longitudinal (B) ;
- une bielle (24) avec une première extrémité articulée à la broche mobile (23) ; et
- un culbuteur (26) articulé à une broche de pivotement fixe (25A) et comprenant un premier bras articulé à une deuxième extrémité de la bielle (24), et un deuxième bras relié rigidement à l'élément de contenance (8) correspondant pour provoquer une rotation du culbuteur (26) autour de la broche de pivotement (25A) afin d'engendrer un déplacement radial de l'élément de contenance (8) depuis ou vers la position d'ouverture maximale ou la position d'ouverture minimale.

3. Distributeur de gobelets (1) selon la revendication 1 ou 2, dans lequel le premier anneau d'ajustement (20) et les premiers mécanismes de levier (21) sont agencés à une extrémité axiale inférieure des éléments de contenance (8).

4. Distributeur de gobelets (1) selon la revendication 3, dans lequel le dispositif d'ajustement (19) comprend en outre un troisième anneau d'ajustement (31) et un nombre de troisièmes mécanismes de levier (21C), qui sont fonctionnellement équivalents au premier anneau d'ajustement (20) et, respectivement, aux premiers mécanismes de levier (21), et sont agencés à une extrémité axiale supérieure des éléments de contenance (8).

5. Distributeur de gobelets (1) selon l'une quelconque des revendications précédentes, dans lequel les éléments de libération (12) définissent un canal de chute de gobelets et sont configurés pour supporter la pile de gobelets et faire sortir des gobelets individuels du bas de la pile ;
les éléments de libération (12) sont mobiles radialement entre une position rétractée, à laquelle le canal de chute de gobelets est configuré pour supporter et libérer des gobelets plus grands, et une position extraite, à laquelle le canal de chute de gobelets est configuré pour supporter et libérer des gobelets plus petits ;
le dispositif d'ajustement (19) est en outre configuré pour déplacer simultanément tous les éléments de libération (12) entre les positions rétractée et extraite afin de modifier une coupe transversale du canal de chute de gobelets.

6. Distributeur de gobelets (1) selon l'une quelconque des revendications précédentes, dans lequel chaque deuxième mécanisme de levier (21B) comprend :
- une broche mobile (23) fixée au troisième anneau d'ajustement (28) pour tourner avec celui-ci autour de l'axe longitudinal (B) ;
- une bielle (29) avec une première extrémité articulée à la broche mobile (23) ; et
- un culbuteur (30) articulé à une broche de pivotement fixe (25A) et comprenant un premier bras articulé à une deuxième extrémité de la bielle (29), et un deuxième bras relié rigidement à un élément de libération (12) correspondant pour provoquer une rotation du culbuteur (30) autour de la broche de pivotement (25A) afin d'engendrer un déplacement radial de l'élément de libération (12) depuis ou vers la position rétractée ou la position extraite.

7. Distributeur de gobelets (1) selon l'une quelconque des revendications précédentes, dans lequel les éléments de contenance (8) se présentent sous la forme de tiges ou de pales longitudinales parallèles à l'axe longitudinal (B) et délimitant le canal de guidage (6).

8. Distributeur de gobelets (1) selon l'une quelconque des revendications précédentes, dans lequel le distributeur de gobelets (1) est d'un type à tourelle et comprend en outre :
- un support (3) monté pour tourner autour d'un axe de rotation (A) ;
- une pluralité d'éléments de contenance et de libération de gobelets (4) montés sur le support (3) autour de l'axe de rotation (A) avec des axes longitudinaux (B) respectifs parallèles à l'axe de rotation (A) ; et
- un actionneur (13) utilisable pour faire tourner le support (3) autour de l'axe de rotation (A) et déplacer sélectivement les éléments de contenance et de libération de gobelets (4) vers un poste de libération de gobelets immobile.
